# EUROPÄISCHE PATENTANMELDUNG

(11) **EP 3 461 858 A1**
(43) Veröffentlichungstag der Anmeldung: **03.04.2019**
(21) Anmeldenummer: 17193750.1
(22) Anmeldetag: 28.09.2017
(51) Int. Cl.: C08J 9/08, C08J 9/00

(54) **ZWEIKOMPONENTENSCHAUMSYSTEM UND DESSEN VERWENDUNG**

(71) Anmelder: HILTI Aktiengesellschaft, 9494 Schaan (LI)
(72) Erfinder: Münzenberger, Herbert, 65191 Wiesbaden (DE); Paetow, Mario, 86899 Landsberg am Lech (DE); Förg, Christian, 86862 Lamerdingen (DE)
(74) Vertreter: Hilti Aktiengesellschaft Corporate Intellectual Property

(57) **Zusammenfassung**

Die Erfindung betrifft ein Zweikomponentenschaumsystem zur Erzeugung von Ortschaum, welches eine Polymerkomponente (A) und eine säurehaltige Komponente (B) umfasst, wobei die Komponente (A) wenigstens ein filmbildendes Polymer in wässriger Dispersion und einen gasbildenden Füllstoff aufweist, der bei Säureeinwirkung CO₂ abspaltet, sowie wahlweise weitere Additive, Extender, Verdicker und Pigmente, und wobei die säurehaltige Komponente (B) wenigstens eine Säure, einen säurebeständigen Füllstoff und Wasser aufweist, sowie wahlweise Extender, Verdicker, Pigmente und/oder weitere Additive, jedoch ausgenommen Gips als säurebeständiger Füllstoff. Der Ortschaum kann als Bauschaum oder Montageschaum verwendet werden.

## Beschreibung

Die vorliegende Erfindung liegt auf dem Gebiet der Baustoffe aus geschäumtem Polymermaterial. Insbesondere betrifft die vorliegende Erfindung ein kennzeichnungsfreies Zweikomponentenschaumsystem auf Basis von Polymerdispersionen zur Erzeugung eines Ortschaums, insbesondere eines Bauschaums oder Montageschaums, und das mit dem Schaumsystem erhältliche Baumaterial in Form eines Ortschaums. Des Weiteren betrifft die vorliegende Erfindung die Verwendung des Zweikomponentenschaumsystems zur Erzeugung von Ortschaum, insbesondere von Bauschaum.

Im Stand der Technik sind verschiedene Schäume zur Verwendung als Bauschäume zum Isolieren, Dämmen, Füllen, Befestigen und Abdichten bekannt. Bei diesen Schäumen handelt es sich um sogenannte Ortschäume, d.h. Schäume, die erst am Einbauort ausgeschäumt werden und dort aushärten.

Es sind Einkomponentenschäume und Zweikomponentenschäume bekannt, die als Zweikomponentenkartuschenschäume oder Zweikomponentenfoliengebinde vorliegen können. Einkomponentenschäume sind leicht zu handhaben aber nur begrenzt lagerstabil. Zweikomponentenschäume können mit einem breiteren Eigenschaftsprofil bereitgestellt werden, da die miteinander reagierenden Komponenten getrennt voneinander gelagert und erst am Einsatzort gemischt werden. Dadurch lässt sich auch eine bessere Kontrolle der Aushärtung des Ortschaums erreichen.

Polyurethan-Bauschäume auf Basis von Isocyanaten bieten besondere Vorteile wie eine hohe Schaumausbeute, einfache Handhabung, schnelle Aushärtung, einfache Herstellung sowie ein günstiges Preis-Volumen-Verhältnis. Nachteilig ist jedoch, dass die klassischen Polyurethanschäume auf Basis von Methylendiphenyldiisocyanat (MDI) unter Verdacht auf krebserzeugende Wirkung stehen und somit gemäß der aktuellen EU-Richtlinie 67/548/EWG als Gefahrstoff der Klasse R40 gekennzeichnet werden müssen. Dies bedeutet auch, dass diese Schäume dem Selbstbedienungsverbot unterliegen, unter Verschluss gehalten werden müssen und nur von geschultem Personal abgegeben werden können. Es wird deshalb seit langem nach alternativen Schäumen gesucht, die isocyanatfrei und monomerfrei sind, insbesondere frei von MDI und TDI, und die somit ohne die damit verbundene Kennzeichnung bzw. sogar kennzeichnungsfrei abgegeben werden können.

Im Handel sind ferner Einkomponenten-Latexschäume aus der Aerosoldose erhältlich. Diese Schäume sind jedoch relativ weich und weisen eine geringe Stabilität auf, wodurch der Schaum beim Aushärten leicht kollabiert. Die Schäume eigen sich deshalb nur als Füllmaterial für schmale Risse.

Zudem sind Zweikomponentenschaumsysteme auf der Grundlage von Silikon- und Epoxidharzen bekannt. Diese Systeme weisen jedoch eine geringe Schaumausbeute auf, sind schwierig in der Verarbeitung und haben ein schlechtes Preis-Volumen-Verhältnis. Zudem handelt es sich um Nischenprodukte, die sich nicht für einen breiten Anwendungsbereich eignen.

In der DE 196 51 448 und der DE 10 2004 043 968 werden schäumbare Zusammensetzungen zur Erzeugung von Leichtgips offenbart, wobei ein Treibmittel eingesetzt wird, welches retardierend oder verzögernd nach seiner Mischung mit Wasser ein Gas erzeugt, wobei die Zeitspanne bis zur Gaserzeugung über das Treibmittel eingestellt werden kann. Diese Zusammensetzungen können eine Polymerdispersion enthalten, um die Festigkeit und Homogenität des aufgeschäumten Gipsmaterials einzustellen.

Eine Aufgabe der vorliegenden Erfindung besteht somit in der Bereitstellung eines Zweikomponentenschaumsystems zur Verwendung als Ortschaum, insbesondere als Montageschaum oder Isolierschaum, mit einem in weiten Bereichen einstellbaren Eigenschaftsprofil, das insbesondere kennzeichnungsfrei vertrieben werden kann und nicht dem Selbstbedienungsverbot unterliegt.

Diese Aufgabe wird durch ein Zweikomponentenschaumsystem gemäß Anspruch 1 gelöst.

Vorteilhafte Ausführungsformen sind in den Unteransprüchen angegeben, die jeweils miteinander kombiniert werden können.

Das erfindungsgemäße Zweikomponentenschaumsystem zur Erzeugung von Ortsschaum umfasst eine Polymerkomponente (A) und eine säurehaltige Komponente (B), wobei die Komponente (A) wenigstens ein filmbildendes Polymer in wässriger Dispersion und einen gasbildenden Füllstoff aufweist, der bei Säureeinwirkung CO₂ abspaltet, sowie wahlweise weitere Additive, Extender, Verdicker und Pigmente, und wobei die säurehaltige Komponente (B) wenigstens eine Säure, einen säurebeständigen Füllstoff und Wasser aufweist, sowie wahlweise Extender, Verdicker, Pigmente und/oder weitere Additive, jedoch ausgenommen Gips als säurebeständiger Füllstoff.

Die Komponente (A) umfasst vorzugsweise und besteht besonders bevorzugt aus:
- 10 bis 50 Gew.-% der wässrigen Dispersion wenigstens eines filmbildenden Polymers,
- 2 bis 10 Gew.-% des wenigstens einen gasbildenden Füllstoffs, der bei Säureeinwirkung CO₂ abspaltet,
- 0 bis 5 Gew.-%, vorzugsweise 0,5 bis 5 Gew.-%, eines oder mehrerer Additive aus der Gruppe der Emulgatoren, Dispergierhilfen, Schaumstabilisatoren und Fungizide,
- 0 bis 15 Gew.-%, vorzugsweise 1 bis 15 Gew.-%, eines oder mehrerer Extender,
- 0 bis 5 Gew.-%, vorzugsweise 0,5 bis 5 Gew.-%, eines oder mehrerer Pigmente und
- 0 bis 5 Gew.-%, vorzugsweise 0,5 bis 5 Gew.-%, eines oder mehrerer Verdicker,
jeweils bezogen auf das Gesamtgewicht der Komponente (A).

Die Komponente (B) umfasst bevorzugt und besteht besonders bevorzugt aus:
- 10 bis 40 Gew.-% Wasser,
- 2 bis 30 Gew.-% der wenigstens einen Säure,
- 10 bis 60 Gew.-% des wenigstens einen säurebeständigen Füllstoffs, ausgenommen abbindefähiger Gips in Form des Semihydrats,
- 0 bis 5 Gew.-%, vorzugsweise 0,5 bis 5 Gew.-%, eines oder mehrerer Verdicker und
- 0 bis 15 Gew.-%, vorzugsweise 1 bis 15 Gew.-%, eines oder mehrerer Extender,
jeweils bezogen auf das Gesamtgewicht der Komponente (B).

In einer weiter bevorzugten Ausführungsform umfasst und ganz besonders bevorzugt besteht die Komponente (A) aus:
- 10 bis 50 Gew.-% der wässrigen Dispersion wenigstens eines filmbildenden Polymers,
- 2 bis 20 Gew.-% des wenigstens einen gasbildenden Füllstoffs, der bei Säureeinwirkung CO₂ abspaltet,
- 10 bis 50 Gew.-% eines säurebeständigen Füllstoffes
- 0 bis 5 Gew.-%, vorzugsweise 0,5 bis 5 Gew.-%, eines oder mehrerer Additive aus der Gruppe der Emulgatoren, Dispergierhilfen, Schaumstabilisatoren und Fungizide,
- 0 bis 30 Gew.-% Brandschutzadditive
- 0 bis 5 % Gew.-% eines Erdalkalisalzes als Vernetzter für Alginat
- 0 bis 15 Gew.-%, vorzugsweise 1 bis 15 Gew.-%, eines oder mehrerer Extender
- 0 bis 5 Gew.-%, vorzugsweise 0,5 bis 5 Gew.-%, eines oder mehrerer Pigmente und
- 0 bis 5 Gew.-%, vorzugsweise 0,5 bis 5 Gew.-%, eines oder mehrerer Verdicker,
jeweils bezogen auf das Gesamtgewicht der Komponente (A).

Mit der vorliegenden Erfindung wird ein kennzeichnungsfreies Produkt bereitgestellt. "Kennzeichnungsfrei" bedeutet hier, dass das Zweikomponentensystem keine Stoffe enthält, welche gemäß der Richtlinie 67/548/EWG mit R40 kennzeichnungspflichtig sind, so dass sie im Handel nicht frei zugänglich zum Verkauf angeboten werden können. Das erfindungsgemäße Zweikomponentenschaumsystem ist frei von kennzeichnungspflichtigen Monomeren und kann daher ohne Einschränkungen in den Handel abgegeben werden.

Die Verwendung filmbildender Polymere in wässriger Dispersion ohne organische Lösungsmittel oder Treibmittel ist besonders umweltfreundlich ermöglicht die Anpassung des Zweikomponentenschaumsystems an eine Vielzahl möglicher Anwendungen. Je nach Art des Polymers, des Polymergehalts und des Anteils an weiteren Füllstoffen und Additiven können die Schaumeigenschaften in einem weiten Anwendungsbereich variiert werden.

Darüberhinaus ist das erfindungsgemäße Zweikomponentenschaumsystem auch für Brandschutzanwendungen geeignet, da die Zellwände des Schaums zum Großteil aus anorganischen Füllstoffen aufgebaut sind, die im Brandfall zusammensintern und eine stabile Asche bilden. Durch Zusatz von Brandschutzadditiven können die Brandschutzeigenschaften noch verbessert werden.

Durch den Zusatz von geeigneten Mitteln wie Additiven, Verdickern und Extendern können das Schaumbildungsverhalten des Schaumsystems sowie die mechanischen Eigenschaften des fertigen Ortsschaums weiter modifiziert werden.

Gegenstand der Erfindung ist außerdem die Verwendung des oben beschriebenen Zweikomponentenschaumsystems zur Erzeugung eines Ortschaums, insbesondere eines Montageschaums oder Bauschaums, zum Isolieren, Dämmen, Füllen, Befestigen und Abdichten, sowie der aus dem Zweikomponentenschaumsystem erhaltene Ortschaum selbst.

Der erfindungsgemäße Ortschaum eignet sich insbesondere zum Verfüllen von Fugen, insbesondere von bewegungsbelasteten Fugen, und als Brandschutzschaum, insbesondere nach Zugabe von Brandschutzadditiven zum Zweikomponentenschaumsystem.

Damit der ausgehärtete Ortschaum ähnliche Eigenschaften wie handelsübliche Polymerschäume aufweisen kann, ist es nicht erwünscht, das Zweikomponentenschaumsystem mit strukturbildendem Gips (Semihydrat) als Füllstoff auszustatten. Die Bildung eines Gerüsts aus Gipskristallen, welche bei der Reaktion von Wasser und abbindefähigem Gips entstehen, verleiht dem resultierenden Ortschaum die Eigenschaften von Leichtgips. Die vorliegende Erfindung stellt deshalb Zweikomponentenschaumsysteme bereit, die frei von abbindefähigem Gips in Form des Semihydrats, sind. Damit können die mechanischen Eigenschaften von Polymerschäumen, insbesondere Polyurethanschäumen, erreicht werden.

Gemäß einer ersten Ausführungsform besteht die Komponente (A) des erfindungsgemäßen Zweikomponentenschaumsystems aus der wässrigen Dispersion wenigstens eines filmbildenden Polymers in einem Anteil von 25 bis 75 Gew.-% und dem gasbildenden Füllstoff, der bei Säureeinwirkung CO₂ abspaltet, in einem Anteil von 2 bis 15 Gew.-%, jeweils bezogen auf das Gesamtgewicht der Komponente (A).

Damit ergeben sich einige Vorteile gegenüber einer auf Gips basierenden Zusammensetzung wie in der DE 196 51 448 A1 offenbart. Der Gips-Schaum erhärtet durch Kristallisation und führt zu einem starren Schaumkörper. Der erfindungsgemäße Polymerschaum hingegen härtet durch Austrocknung und führt zu einem elastischen Schaumkörper. Außerdem ist, im Gegensatz zu den Gips basierenden Systemen, es nicht erforderlich, große Mengen anzumischen. Die Komponenten können fertig verpackt werden, so dass die Masse in den tatsächlich zu verwendenden Mengen direkt über einen Statikmischer ausgetragen werden kann. Ein weiterer Vorteil der erfindungsgemäßen Zusammensetzung ist, dass Brandschutzadditive, die bei einem Gipsschaum unnötig bzw. nicht wirksam sind, da hier keine Intumeszenz möglich ist und etwa Blähgraphhit die Struktur der ausgehärteten Masse zerstören würde, eingesetzt werden können.

Die Polymerdispersion der Komponente (A) besteht im Wesentlichen aus Wasser und den darin dispergierten Polymeren. Somit ist das Zweikomponentenschaumsystem frei von monomeren Bestandteilen der Polymere. Das Zweikomponentensystem enthält somit insbesondere keine reaktiven Monomere, die in bekannten Schaumsystemen verwendet werden, um eine Polymerisation erst beim Aufschäumen der Komponente(n) herbeizuführen, wie beispielsweise Isocyanate.

Als filmbildende Polymere eignen sich alle Polymere, die beim Trocknungsprozess verfilmen, d.h. bei denen die Polymerpartikel in der Dispersion durch chemische und/oder physikalische Vorgänge mit benachbarten Polymerpartikeln einen zusammenhängenden Film bilden.

Geeignete filmbildende Polymere für die wässrige Dispersion sind insbesondere Polymere, die aus der Gruppe bestehend aus Polyacrylaten, Polyvinylacetat, Acrylat-Vinylacetat-Copolymeren, Polyurethanen und Naturlatex sowie Mischungen davon ausgewählt sind. Bevorzugt sind Polyacrylate und/oder Acrylat-Vinylacetat-Copolymere, besonders bevorzugt Polyacrylate.

Besonders bevorzugt sind Dispersionen von Polymeren, die bei einer pH-Wert-Verschiebung vom üblicherweise neutralen oder basischen Milieu der Komponente (A) in das saure Milieu des Gemischs der Komponenten (A) und (B) verfilmen. Dadurch kommt es zu einer raschen Erhöhung der Viskosität des wandbildenden Polymerfilms und die Stabilität des Schaums wird bereits vor dem Trocknungsprozess verbessert. Somit kann eine schnelle Härtung des Schaums erreicht werden, bevor die Masse abgetrocknet. Die Schaumzellen werden so stabilisiert und können nicht mehr aufbrechen. Geeignete Dispersionen sind beispielsweise: Luphen D DS 3548 (BASF) und Abmischungen mit anderen Dispersionen, wie Acronal 5011, Acronal 5041, Acronal V278 (jeweils BASF) um das Verfilmen zu steuern.

Der Feststoffgehalt der wässrigen Polymerdispersion liegt vorzugsweise im Bereich von 25 Gew.-% bis 80 Gew.-%, besonders bevorzugt zwischen 50 Gew.-% bis 70 Gew.-%. Ein hoher Feststoffgehalt der Dispersion ist vorteilhaft, da in diesem Fall der Volumenschwund des Ortschaums durch Wasserverlust während der Aushärtung gering gehalten werden kann.

Der gasbildende Füllstoff in Komponente (A) des erfindungsgemäßen Schaumsystems, der bei Säureeinwirkung CO₂ abspaltet, ist vorzugsweise ein Metallcarbonat, insbesondere ein Carbonat von Alkalimetallen und/oder Erdalkalimetallen, bevorzugt Calciumcarbonat. Erfindungsgemäß können auch Carbonat-haltige Gesteine und Mineralien eingesetzt werden, wie beispielweise Calciumcarbonat in Form von Kreide, Kalkstein, Marmor, Calcit und Aragonit, sowie Dolomit (CaMg(CO₃)₂). Bevorzugt sind CaCO₃ und CaCO₃-haltige Mineralien und Gesteine.

Gemäß einer bevorzugten Ausführungsform des erfindungsgemäßen Zweikomponentenschaumsystems umfasst die Komponente (A) neben der wässrigen Polymerdispersion und dem ersten Füllstoff, der bei Säureeinwirkung CO₂ abspaltet, zusätzlich noch weitere Additive, Extender, Pigmente und/oder Verdicker, jeweils in einem Anteil von mindestens 0,5 Gew.-%, bezogen auf das Gesamtgewicht der Komponente (A).

Der Anteil der weiteren Additive liegt vorzugsweise im Bereich von 0,5 bis 5 Gew.-%, vorzugsweise bis 3 Gew.-%. Beispiele für im Stand der Technik übliche Additive sind insbesondere Emulgatoren, Frostschutzmittel, Dispergierhilfen, Schaumstabilisatoren und Fungizide.

Als weitere Additive können ferner bevorzugt Brandschutzadditive wie Aluminiumtrihydrat (ATH), Zinkborat, Ammoniumpolyphosphat (APP) und Blähgraphit sowie Mischungen davon eingesetzt werden. Das erfindungsgemäße Zweikomponentenschaumsystem weist bereits einen relativ hohen Anteil an anorganischen Füllstoffen auf. Im Falle eines Brandes sintern die Füllstoffe in den Zellwänden des Schaums zusammen und bilden eine stabile Asche. Das Schaumsystem der vorliegenden Erfindung ist deshalb auch für Brandschutzanwendungen geeignet. Durch den Zusatz von Brandschutzadditiven können die Brandschutzeigenschaften des Schaumsystems weiter verbessert werden.

Die Komponente (A) des erfindungsgemäßen Schaumsystems kann außerdem einen oder mehrere Extender enthalten, bevorzugt in einem Anteil von 1 bis 15 Gew.-% und besonders bevorzugt 4 bis 10 Gew.-%, bezogen auf das Gesamtgewicht der Komponente (A).

Als Extender werden nicht wässrige flüssige Stoffe bezeichnet, die die Verarbeitung, insbesondere das Ausbringen aus Kartusche, Beutel, etc. positiv beeinflussen, wie etwa Weichmacher, Harze, Öle, Lösungsmittel, Verdünner allgemein.

Im Rahmen der vorliegenden Erfindung geeignete Extender sind insbesondere Flüssig-Harze oder Weichmacher wie Acrylate und Oligomere von Polyisobutylen (PIB) oder Polybuten. Beispiele für Weichmacher sind insbesondere Phthalate, Adipate, Sebacate, Mellitate, Benzoate, Solfonate, Phosphorsäureester, Polyethylen- und Polypropylenglycole. Bevorzugt liegt die Molmasse der genannten Extender im Bereich von 100 bis 2000 kg/mol, bevorzugt 400 bis 800 kg/mol.

Durch die Verwendung von Weichmachern als Extender kann die Elastizität des Ortschaums eingestellt werden. Dies ermöglicht beispielsweise seine Verwendung zum Verfüllen von Fugen, die einer Bewegungsbelastung ausgesetzt sind. Ferner haben die Extender den Vorteol, dass durch deren Verwendung der Wasserbedarf der Zusammensetzung, insbesondere der Polymerkomponente, herabgesetzt und somit die Aushärtezeit der Zusammensetzung verringert werden kann.

Als weitere Zusätze können der Komponente (A) des erfindungsgemäßen Schaumsystems bevorzugt Pigmente zur Farbgebung zugemischt werden. Die Pigmente liegen vorzugsweise in einem Anteil von 0,5 bis 5 Gew.-% vor, bevorzugt von 1 bis 3 Gew.-%, jeweils bezogen auf das Gesamtgewicht der Komponente (A).

Als Verdicker können erfindungsgemäß alle bekannten Stoffe eingesetzt werden, mit denen die Viskosität von wässrigen Systemen erhöht werden kann. Bevorzugt enthält die Komponente (A) des erfindungsgemäßen Schaumsystems einen oder mehrere Verdicker in einem Anteil von 0,5 bis 5 Gew.-%, bevorzugt 0,5 bis 3 Gew.-%, jeweils bezogen auf das Gesamtgewicht der Komponente (A).

Im Rahmen der vorliegenden Erfindung geeignete Verdicker sind Polysaccharide, Alginate, Agar-Agar, Stärke sowie hochdisperse Kieselsäure, Bentonite, Polymerverdicker und Zellulosederivate wie Methylzellulose.

Gemäß einer besonders bevorzugten Ausführungsform umfasst der Verdicker in der Komponente (A) des erfindungsgemäßen Schaumsystems mindestens ein Alginat, bevorzugt Natriumalginat.

Das Natriumalginat kann mit Ca²⁺-, Mg²⁺- oder Al³⁺-Ionen durch Komplexbildung reagieren. Hierzu kann die zusammensetzung beispielsweise Calciumchlorid, Calciumacetat oder Calciumoxalat enthalten. Die Komplexbildung führt zu einer Vernetzung des Alginats und damit zu einer schlagartigen Erhöhung der Viskosität des Schaumsystems. Die Zellwände des Schaums werden somit innerhalb kürzester Zeit stabilisiert und können während der Aushärtung des Schaums durch Trocknung nicht mehr kollabieren. Das Alginat wird bevorzugt in einer Menge von 0,2 bis 3 Gew.-%. eingesetzt.

Die Komponente (B) des erfindungsgemäßen Zweikomponentenschaumsystems besteht mindestens aus Wasser, einer Säure und einem säurebeständigen Füllstoff, sowie wahlweise wenigstens einem Extender und/oder Verdicker.

Der Wasseranteil in der Komponente (B) beträgt von 3 bis 40 Gew.-%, der Anteil der Säure beträgt 2 bis 30 Gew.-% und der Anteil des säurebeständigen Füllstoffs beträgt 10 bis 60 Gew.-%, jeweils bezogen auf das Gesamtgewicht der Komponente (B). Der Anteil der Säure ist abhängig vom Mischungsverhältnis, wobei beispielsweise bei einem Mischungsverhältnis von 10:1 (A:B) mehr Säure und bei einem Mischungsverhältnis von 1:1 (A:B) weniger Säure verwendet wird.

Darüber hinaus kann die Komponente (B) wenigstens einen Extender in einem Anteil von 0 bis 70 Gew.-%, vorzugsweise 1 bis 15 Gew.-% und/oder wenigstens einen Verdicker in einem Anteil von 0 bis 5 Gew.-%, vorzugsweise von 0,5 bis 5 Gew.-% enthalten, jeweils bezogen auf das Gesamtgewicht der Komponente (B).

Der Anteil an Wasser in der Komponente (B) ist vorzugsweise möglichst niedrig, damit das Schrumpfen des Schaums während der Aushärtung gering gehalten wird. Allerdings soll der Wasseranteil dazu ausreichen, die Säure in der Komponente (B) möglichst vollständig zu lösen, damit eine gute Durchmischung der Komponenten (A) und (B) und eine schnelle Schaumbildung erreicht werden kann.

Bevorzugt liegt der Wasseranteil in der Komponente (B) im Bereich von 5 bis 20 Gew.-%.

Die Säure in der Komponente (B) reagiert mit dem ersten Füllstoff in der Komponente (A) unter Freisetzung von CO₂ aus dem Füllstoff, sobald die Komponenten (A) und (B) miteinander gemischt werden.

Der Säureanteil in der Komponente (B) ist auf den Anteil des ersten Füllstoffs in der Komponente (A) abgestimmt und vorzugsweise so gewählt, dass der erzeugte Ortschaum neutral ist. Bei Verwendung eines durch Säureeinwirkung verfilmbaren Polymers in der Komponente (A) liegt die Säure in der Komponente (B) bevorzugt in einem geringen stöchiometrischen Überschuss mit Bezug auf den ersten Füllstoff in der Komponente (A) vor.

Der Säureanteil in der Komponente (B) ist von der Art der Säure, wie etwa dem Molekulargewicht, abhängig und kann durch den Fachmann in einfacher Weise ermittelt werden.

Die Art der verwendeten Säure ist nicht kritisch. Es kann eine anorganische oder eine organische Säure verwendet werden. Organische Säuren sind jedoch bevorzugt, da sie als Reinstoff zugesetzt werden können. Vorzugsweise ist die Säure vorzugsweise aus der aus Essigsäure, insbesondere Eisessig, Oxalsäure und Zitronensäure bestehenden Gruppe ausgewählt. Besonders bevorzugt ist Essigsäure in Form von Eisessig. Daneben können auch Phosphorsäure und polymere Säuren wie Polyacrylsäuren verwendet werden.

Des Weiteren kann die Komponente (B) mindestens einen säurebeständigen Füllstoff enthalten. Im Rahmen der vorliegenden Erfindung bedeutet säurebeständig, dass der Füllstoff unter Lagerbedingungen keine Reaktionen mit der Säure oder säurekatalysierte Reaktionen unter Veränderung seiner chemischen Struktur eingeht. Der säurebeständige Füllstoff dient als anorganische Matrix für den Ortschaum und erlaubt zusammen mit dem Polymeranteil eine Einstellung der Festigkeit und Härte des ausgehärteten Schaums sowie zur Volumeneinstellung für den Mischprozess. Bevorzugt liegt der säurebeständige Füllstoff in einem Anteil von 0 bzw. 5 bis 70 Gew.-%, bezogen auf das Gesamtgewicht der Komponente (B) vor.

Als säurebeständige Füllstoffe für die Zwecke der vorliegenden Erfindung eignen sich insbesondere Schwerspat (Baryt, BaSO₄), Tone, Kaolin, Calcium-Magnesium-Silikate, z.B. Sepiolit, Silikate, insbesondere gefällte Kieselsäure und wasserhaltige Magnesiumsilikate, wie Talkum.

Nicht von der Erfindung umfasst ist die Verwendung von Gips, insbesondere in seiner abbindefähigen bzw. nicht abgebundenen Form, als säurebeständiger Füllstoff. Hierzu zählt insbesondere das Anhydrit sowie das Hemihydrat von Calciumsulfat oder andere teilentwässerte Formen davon. Nicht abgebundener Gips bildet bei Kontakt mit Wasser in der Regel Hydrate mit nadelförmigen Kristallen, die strukturbildend sind. Dadurch werden die Eigenschaften des Ortschaums in unerwünschter Weise beeinflusst.

Als Extender und Verdicker in der Komponente (B) können die gleichen Stoffe und Stoffgruppen wie für die Komponente (A) verwendet werden. Die in den Komponenten (A) und (B) eingesetzten Extender und/oder Verdicker können jeweils gleich oder verschieden sein.

Der Anteil an Verdicker in der Komponente (B) beträgt vorzugsweise von 0,5 bis 5 Gew.-%, bevorzugt bis 3 Gew.-%, jeweils bezogen auf das Gesamtgewicht der Komponente (B).

Besonders bevorzugte Verdicker sind Alginate, vorzugsweise Natriumalginat, die sowohl in Komponente (A) als auch in der Komponente (B) eingesetzt werden können. Alginate bewirken eine spontane Viskositätserhöhung der Schaummasse, sobald sie in Kontakt mit Calciumionen aus dem ersten Füllstoff der Komponente (A) kommen. Die Viskositätserhöhung beruht auf einer durch die Calciumionen ausgelösten Vernetzungsreaktion des Alginats. Durch den raschen Viskositätsanstieg werden die Schaumzellen stabilisiert und können während der Aushärtung nicht mehr kollabieren.

Gemäß einer bevorzugten Ausführungsform wird Alginat zusammen mit einemr Säure eingesetzt, die mit Ca²⁺-Ionen keine schwerlöslichen Komplexe bildet. Bevorzugt als Säure ist in diesem Fall Essigsäure.

Die Verwendung von Alginaten als Verdicker in der Komponente (A) ist möglich, da CaCO₃ kaum wasserlöslich ist und somit so gut wie keine vernetzenden freien Ca²⁺-Ionen in der Komponente (A) vorliegen. Vorzugsweise werden Alginate als Verdicker nur in der Komponente (B) eingesetzt.

Die Komponenten (A) oder (B) können zur Optimierung der Eigenschaften auch organische oder anorganische Fasern enthalten, wie beispielsweise Glasfasern, Mineralfasern, oder Cellulosefasern.

Zur Herstellung des erfindungsgemäßen Zweikomponentenschaumsystems werden die Bestandteile der jeweiligen Komponenten innig vermischt und die Komponenten nebeneinander in getrennten Behältnissen bereitgestellt. Dabei ist eine Anordnung als Beutel-in-Beutel Foliengebinde in einer Kartusche bevorzugt.

Zur Erzeugung von Ortschaum werden die beiden Komponenten A und B bevorzugt in einem Gewichtverhältnis der Komponenten (A) : (B) von 15:1 bis 5:1, bevorzugt 12:1 bis 8:1, besonders bevorzugt 10:1, bereitgestellt und miteinander in einem Statikmischer gemischt.

Dabei kommt die Säure der Komponente (B) mit dem ersten Füllstoff der Komponente (A) in Kontakt und reagiert mit dem Füllstoff unter Abspaltung von CO₂. Das so erzeugte Kohlendioxid wirkt als Treibgas und schäumt die Mischung auf.

Der Austrag der gemischten Komponenten über einen Statikmischer gewährleistet, dass die Schaumzellen nicht aufbrechen und der Ortschaum direkt in die zu füllende Öffnung gebracht werden kann.

Die Viskosität des Ortschaums kann insbesondere durch Verwendung eines durch Säureeinwirkung verfilmbaren Polymers in der Komponente (A) und/oder durch Verwendung von Alginaten als Verdicker und/oder durch die Art und die Menge der Füllstoffe in wenigstens einer der Komponenten (A) und (B) so eingestellt werden, dass die Schaumzellen während der Aushärtung des Ortschaums nicht kollabieren und der Schaum stabil bleibt.

Die Trocknungszeiten betragen je nach Wassergehalt der Mischung vorzugsweise weniger als 48 Stunden, bevorzugt weniger als 24 Stunden.

Die Verarbeitung des erfindungsgemäßen Schaumsystems kann in handelsüblichen Zweikomponentenkartuschen mit Statikmischer, insbesondere in den oben erwähnten Kartuschen mit Beutel-in-Beutel Foliengebinden erfolgen.

Der aus dem erfindungsgemäßen Zweikomponentenschaumsystem hergestellte Ortschaum wird vorzugsweise als Montageschaum oder Bauschaum, insbesondere zum Verfüllen von Fugen, oder zum Isolieren, Dämmen, Befestigen und Abdichten verwendet. Insbesondere kann der erfindungsgemäße Ortschaum als Brandschutzschaum verwendet werden.

Die Erfindung wird im Folgenden anhand bevorzugter Ausführungsformen näher erläutert, die jedoch nicht in einem einschränkenden Sinn verstanden werden sollen.

### AUSFÜHRUNGSBEISPIELE

### Beispiel 1

Als Komponente (A) eines Zweikomponentenschaumsystems werden die folgenden Stoffe miteinander vermischt und in einem geschlossenen Behälter bereitgestellt:

| | |
|---|---|
| 400 g | Polymerdispersion (Acronal V271) |
| 3 g | Pigmentbenetzer (Pigmentverteiler NL; BASF) |
| 750 g | Calciumcarbonat |
| 5 g | Alginat |
| 3 g | NH₃-Lsg. (25 %-ig) |

Die Kompente (B) wird durch Mischen folgender Stoffe zubereitet:

| | |
|---|---|
| 15 g | Wasser |
| 15 g | Extender (Indupol) |
| 90 g | BaSO₄ - Schwerspat als säurestabiler Füllstoff |
| 3 g | Verdicker Walcocell |
| 5 g | Essigsäure (90 %-ig oder Eisessig) |

Die Komponenten (A) und (B) werden getrennt voneinander in eine mit einem Statikmischer versehene Zweikomponentenkartusche eingebracht und anschließend über den Statikmischer ausgetragen. Der aus der Kartusche ausgetragene Schaum hatte eine Dichte von 270 g/l und war nach ca. 24 Stunden ausgehärtet.

### Beispiel 2

Als Komponente (A) eines Zweikomponentenschaumsystems werden die folgenden Stoffe miteinander vermischt und in einem geschlossenen Behälter bereitgestellt:

| | |
|---|---|
| 318 g | Polymerdispersion (Acronal V278 FK: 65%, Visk: 250mPa*s; BASF) |
| 400 g | Calciumcarbonat (Omyacarb 5-SV; Fa. Omya) |
| 20 g | Monoethylenglycol |
| 7 g | Aerosil 200 |
| 120 g | Blähgrafit (ADT 249) |
| 5 g | Schaumstabiligator Empicol ESC 3L |

Die Kompente (B) wird durch Mischen folgender Stoffe zubereitet:

| | |
|---|---|
| 80 g | Polyethylenglycol Pluriol E600 (BASF) |
| 20 g | Phosphorsäure (85%-ig) |
| 30 g | Talkum als säurestabiler Füllstoff |

Die Komponenten (A) und (B) werden getrennt voneinander in eine mit einem Statikmischer versehene Zweikomponentenkartusche eingebracht und anschließend über den Statikmischer ausgetragen. Der aus der Kartusche ausgetragene Schaum hatte eine Dichte von 280g/l und war nach ca. 36 Stunden ausgehärtet.

## Patentansprüche

1. Zweikomponentenschaumsystem zur Erzeugung von Ortschaum, mit einer Polymerkomponente (A) und einer säurehaltigen Komponente (B), wobei die Komponente (A) wenigstens ein filmbildendes Polymer in wässriger Dispersion und einen gasbildenden Füllstoff aufweist, der bei Säureeinwirkung CO₂ abspaltet, sowie wahlweise weitere Additive, Extender, Verdicker und Pigmente, und wobei die säurehaltige Komponente (B) wenigstens eine Säure, einen säurebeständigen Füllstoff und Wasser aufweist, sowie wahlweise Extender, Verdicker, Pigmente und/oder weitere Additive.

2. Zweikomponentenschaumsystem nach Anspruch 1, bei dem die Komponente (A) umfasst:
| | |
|---|---|
| 10 bis 50 Gew.-% | der wässrigen Polymerdispersion, |
| 2 bis 10 Gew.-% | des wenigstens einen gasbildenden Füllstoffs |
| 0 bis 5 Gew.-% | eines oder mehrerer Additive aus der Gruppe der Brandschutzadditive, Emulgatoren, Dispergierhilfen, Schaumstabilisatoren, Fasern und Fungizide, |
| 0 bis 15 Gew.-% | eines oder mehrerer Extender, |
| 0 bis 5 Gew.-% | eines oder mehrerer Pigmente und |
| 0 bis 5 Gew.-% | eines oder mehrerer Verdicker, |
jeweils bezogen auf das Gesamtgewicht der Komponente (A).

3. Zweikomponentenschaumsystem nach Anspruch 1 oder 2, wobei die Komponente (B) umfasst:
| | |
|---|---|
| 10 bis 40 Gew.-% | Wasser, |
| 2 bis 30 Gew.-% | der wenigstens einen Säure, |
| 10 bis 60 Gew.-% | des säurebeständigen Füllstoffs, |
| 0 bis 5 Gew.-% | eines oder mehrerer Verdicker und |
| 0 bis 15 Gew.-% | eines oder mehrerer Extender, |
jeweils bezogen auf das Gesamtgewicht der Komponente (B).

4. Schaumsystem nach einem der Ansprüche 1 bis 3, **dadurch gekennzeichnet, dass** die Komponente (A) mindestens einen oder mehrere aus der aus Additiven, Extendern, Pigmenten, Fasern und Verdickern bestehenden Gruppe ausgewählte Bestandteile in einem Anteil von jeweils 0,5 Gew.-% enthält.

5. Schaumsystem nach einem der vorhergehenden Ansprüche, **dadurch gekennzeichnet, dass** die Komponente (B) mindestens einen oder mehrere aus der aus Extendern und Verdickern bestehenden Gruppe ausgewählte Bestandteile in einem Anteil von jeweils 0,5 Gew.-% enthält.

6. Schaumsystem nach einem der vorhergehenden Ansprüche, **dadurch gekennzeichnet, dass** die Polymerdispersion eine wässrige Dispersionen eines aus der aus Polyacrylaten, Polyvinylacetat, Polyacrylnitril, Acrylat-Vinylacetat-Copolymeren, Polyurethanen und Naturlatex sowie deren Mischungen bestehenden Gruppe ausgewählten Polymers ist, vorzugsweise von Polyacrylaten und/oder Acrylat-Vinylacetat-Copolymeren, noch bevorzugter von Polyacrylaten.

7. Schaumsystem nach einem der vorhergehenden Ansprüche, **dadurch gekennzeichnet, dass** die Polymerdispersion bei einer pH-Wert-Verschiebung zum Sauren verfilmbar ist.

8. Schaumsystem nach einem der vorhergehenden Ansprüche, **dadurch gekennzeichnet, dass** der gasbildende Füllstoff ausgewählt ist aus der Gruppe bestehend aus Metallcarbonaten und Metallcarbonat-haltigen Mineralien und Gesteinen, vorzugsweise CaCO₃ und CaCO₃-haltigen Mineralien und Gesteinen.

9. Schaumsystem nach einem der vorhergehenden Ansprüche, **dadurch gekennzeichnet, dass** das Additiv in der Komponente (A) ein Brandschutzadditiv ist, vorzugsweise ausgewählt aus der Gruppe bestehend aus Aluminiumtrihydrat, Zinkborat, Ammoniumpolyphosphat und Blähgraphit sowie Mischungen davon.

10. Schaumsystem nach einem der der vorhergehenden Ansprüche, **dadurch gekennzeichnet, dass** die Säure ausgewählt ist aus der Gruppe bestehend aus Essigsäure, Oxalsäure, Phosphorsäure und Zitronensäure, bevorzugt Essigsäure und Phosphorsäure.

11. Schaumsystem nach einem der vorhergehenden Ansprüche, **dadurch gekennzeichnet, dass** der Verdicker in der Komponente (A) und/oder der Komponente (B) ein Alginat umfasst, vorzugsweise Na-Alginat, und dass der erste Füllstoff CaCO₃ enthält.

12. Schaumsystem nach einem der vorhergehenden Ansprüche, **dadurch gekennzeichnet, dass** die Komponente (A) und die Komponente (B) in einem Massenverhältnis von 15: 1 bis 5:1, vorzugsweise 12:1 bis 8:1, vorliegen.

13. Verwendung des Zweikomponentenschaumsystems nach einem der Ansprüche 1 bis 12 zur Erzeugung von Ortschaum, insbesondere Montageschaum oder Bauschaum zum Verfüllen von Fugen, zum Isolieren, Dämmen, Befestigen und Abdichten, und/oder als Brandschutzschaum.

14. Verwendung nach Anspruch 13, wobei die Komponenten (A) und (B) in einem Statikmischer gemischt und über diesen ausgetragen werden.

15. Zweikomponentenkartusche umfassend das Zweikomponentenschaumsystem gemäß einem der Ansprüche 1 bis 13, wobei die Komponenten (A) und (B) getrennt voneinander, vorzugsweise in einem Beutel-in-Beutel-Foliengebinde vorliegen.
